# EUROPÄISCHE PATENTSCHRIFT

(11) **EP 0 855 994 B1**
(45) Veröffentlichungstag und Bekanntmachung des Hinweises auf die Patenterteilung: **13.06.2001**
(21) Anmeldenummer: 97918988.3
(22) Anmeldetag: 15.08.1997
(51) Int. Cl.: C03C 3/253, G02B 27/00, G02B 3/00, G02B 9/04

(54) **ACHROMATISCHES LINSENSYSTEM FÜR ULTRAVIOLETTSTRAHLEN MIT GERMANIUMDIOXID-GLAS**
ACHROMATIC LENS SYSTEM FOR ULTRAVIOLET RADIATION WITH GERMANIUM DIOXIDE GLASS
SYSTEME DE LENTILLES ACHROMATIQUE POUR RAYONS ULTRAVIOLETS COMPORTANT DU VERRE AU DIOXYDE DE GERMANIUM

(30) Priorität: 16.08.1996 DE 19633128
(43) Veröffentlichungstag der Anmeldung: 05.08.1998
(73) Patentinhaber: Carl Zeiss, 89518 Heidenheim (Brenz) (DE); CARL-ZEISS-STIFTUNG, HANDELND ALS CARL ZEISS, 89518 Heidenheim (Brenz) (DE)
(72) Erfinder: SCHUSTER, Karl, Heinz, D-89551 Königsbronn (DE)
(86) Internationale Anmeldenummer: EP9704468
(87) Internationale Veröffentlichungsnummer: WO9807666

(56) Entgegenhaltungen:
- EP-A- 0 284 414
- DD-A- 211 545
- DATABASE WPI Section Ch, Week 8313 Derwent Publications Ltd., London, GB; Class L01, AN 83-30430K XP002050077 & JP 58 026 050 A (AGENCY OF IND SCI & TECHNOLOGY) , 16.Februar 1983
- SHIGEKI SAKAGUCHI: "CONSOLIDATION OF GEO2 SOOT BODY PREPARED BY FLAME HYDROLYSIS REACTION" JOURNAL OF NON-CRYSTALLINE SOLIDS, Bd. 171, Nr. 3, 2.August 1994, Seiten 228-235, XP000486705

## Beschreibung

Die Erfindung betrifft ein achromatisches Linsensystem für Ultraviolettstrahlen nach dem Oberbegriff des Anspruchs 1, ein Projektionsbelichtungssystem nach Anspruch 4 und ein Verfahren zur Herstellung von optischem Glas aus Germaniumdioxid nach dem Oberbegriff des Anspruchs 8.

Die Schwierigkeiten der Achromatisierung im tiefen Ultraviolett sind bekannt. Außer Quarzglas stehen im wesentlichen nur kristalline Materialien zur Verfügung. Probleme macht dabei die Anisotropie der Kristalle, die neben der Doppelbrechung auch zu schlechter Herstellbarkeit polierter gekrümmter Flächen führt. Zudem sind die möglichen Materialien wenig beständig gegen Umwelteinflüsse.

In US 5,028,967 ist dies beschrieben. Als Problemlösung wird hier die Verwendung von SiO₂-Glas mit Beimischung von GeO₂, auch zusammen mit Boroxid, angegeben. Beansprucht wird ein GeO₂-Gehalt bis zu 50 mol %. Das Beispiel mit dem höchsten GeO₂-Gehalt hat 13,5 mol % GeO₂ und als bevorzugt werden bis zu 30 mol % angegeben. Dabei sind die Abweichungen von Brechzahl, Dispersion und Abbe-Zahl gegenüber reinem Quarzglas gering, die Achromatisierung damit ist daher schwierig.

Die Herstellung von amorphem Germaniumoxid aus farblosem Glas ist an sich bekannt, z.B. aus Ullmanns Encyklopädie der technischen Chemie 4. Auflage Band 12, Weinheim New York 1985, Aufsatz "Germanium und Germanium-Verbindungen" Seiten 221-226, Stichwort "Germaniumdioxid", Seite 225, und aus der dort zitierten FR-A 20 18 484 (Seite 1, Zeilen 12-19, zugehöriger Recherchenbericht, sowie Titel und Kurzanalyse des Zitats "Secrist und Mackenzie").

In einer Version wird kristallines GeO₂ durch Hydrolyse von GeCl₄ erzeugt, geschmolzen und schnell abgekühlt. Dies dient als Vormaterial zum Vermahlen als pulverförmiges Katalysatormaterial. Secrist und Mackenzie lassen aus einem Sauerstoffplasma mit C₂H₅OGe auf eine kühlere Unterlage aus der Gasphase GeO₂ abschneiden und erzeugen so nichtkristalline Filme.

Als Linsenrohlinge brauchbare GeO₂-Glaskörper sind aber nicht bekannt.

Aus Ullmann a.a.O., Stichwort "Germanate" Seite 225 sind optische Gläser aus Germanaten, z.B. Zn₂GeO₄, bekannt, welche eine hohe Brechzahl aufweisen.

Aufgabe der Erfindung ist die Bereitstellung eines Achromaten mit guter Transmission im tiefen Ultraviolett (DUV) und eines Projektionsbelichtungssystems mit einem solchen Achromaten. Ein in Kombination mit Quarzglas dafür geeignetes Glas soll bereitgestellt werden.

Gelöst wird diese Aufgabe durch ein achromatisches Linsensystem nach Anspruch 1, ein Projektionsbelichtungssystem nach Anspruch 4 und ein Herstellverfahren für GeO₂-Glas gemäß Anspruch 8. Vorteilhafte Ausgestaltungen sind Gegenstand der Unteransprüche 2-3 und 5-7.

Mit Germaniumdioxid-Glas in optischer Qualität wird ein DUV-transparentes Material bereitgestellt, das nicht kristallin ist und damit keine Polarisationseffekte zeigt und gut polierbar und handhabbar ist. Zudem hat es eine deutlich höhere Dispersion als Quarzglas, so daß die größeren Sammellinsen im Achromaten aus dem technologisch ausgereiften Quarzglas gefertigt werden können und der neue Werkstoff in den kleineren Formaten der zerstreuenden Linsen zum Einsatz gelangt.

Mit einer Abbe-Zahl ν_{D} = 40,946 und einem Brechungsindex von n_{D} = 1,6075 - Meßwerte an einem Probeprisma von 1 cm Kantenlänge - ergeben sich zudem vorteilhaft große Differenzen zu Quarzglas, welche den Aufbau eines Achromaten gegenüber der US 5,028,967 vereinfachen.

Beimengungen anderer Stoffe im Germaniumdioxid-Glas, insgesamt jedoch weniger als 50 % und vorzugsweise minimale Mengen, sind möglich.

Für diese Anwendung bekannte Fluoride (CaF₂ usw. z.B.
US 4,977,426) haben eine nur wenig abweichende, und zwar geringere, Dispersion und sind kristallin, außer BeF₂, welches aber hochgiftig ist. Andere Kristalle wie Halogenide (NaCl u.a.) oder Phosphate haben zwar höhere Dispersion als Quarzglas, aber ähnliche Nachteile (z.B. Kristallfehler).

Gegenüber dem GeO₂- haltigen Glasgemisch der US 5,289,967 haben reine Stoffe grundsätzlich den Vorteil höherer Transmission im DUV. Die Unterschiede der optischen Eigenschaften sind deutlich größer.

Im Beleuchtungsstrahlengang, wie gemäß Anspruch 6 vorgesehen, sind auch sehr kleine Linsen aus GeO₂ brauchbar, z.B. als Elemente eines Wabenkondensors.

Die angegebene Herstellmethode des Anspruchs 8 hat den Vorteil, daß GeCl₄ in geeignet hochreiner Form als Industriestandard aus der Produktion von Germanium-Einkristallen verfügbar ist. Die Herstellung einer Scheibe als Tragkörper kann nach einem der zitierten oder den hier angegebenen Verfahren erfolgen.

Näher erläutert wird die Erfindung anhand der Zeichnungen.
- Fig. 1: zeigt einen exemplarischen Achromaten mit Quarzglas-Sammellinse und Germaniumdioxid-Zerstreuungslinse;
- Fig. 2: zeigt schematisch ein Projektionsbelichtungssystem mit GeO₂-Glas-Linsen in Beleuchtung und Projektionsobjektiv.

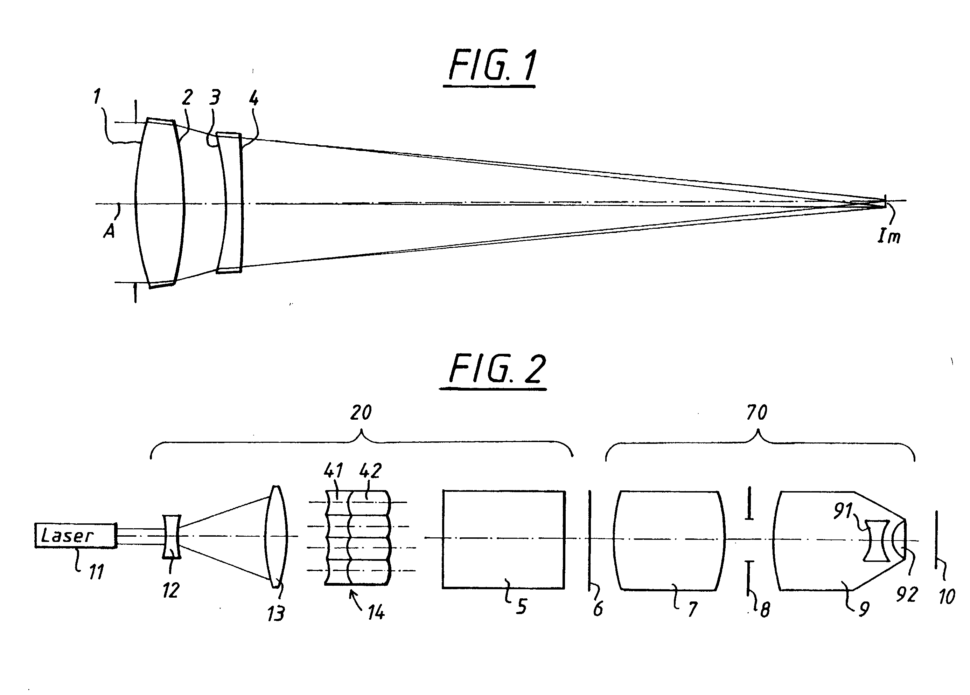

Der Achromat der Fig. 1 hat die Konstruktionsdaten der Tabelle 1 mit den Linsenflächen 1, 2 der sammelnden Quarzlinse und den Linsenflächen 3, 4 der zerstreuenden Germaniumdioxid-Linse. Er bildet das Objekt Ob aus dem Unendlichen auf die Bildebene Im ab mit einem chromatischen Längsfehler CHV ≈ 3,3 µm bei der Wellenlänge λ = 312,56 ± 5 nm. (Bei 248,5 ± 5 nm ist CHV = 19 µm, bei 248,5 ± 0,5 nm noch CHV = 0,5 µm.) Das Verhältnis der "Abbe-Zahl" von Quarz und GeO₂-Glas beträgt bei dieser Wellenlänge λ = (312,6 ± 10 nm) 2,47. Der Vergleichswert für Kalziumfluorid beträgt 0,70.

Durch den großen Dispersionsunterschied von Germaniumdioxid-Glas zu Quarzglas gelingt es auch bei einem Achromaten mit Luftabstand wie in diesem Beispiel, den Gaußfehler zu korrigieren.

Figur 2 stellt ein DUV-Projektionsbelichtungssystem dar, bei der sowohl im Beleuchtungssystem 20 als auch im Projektionsobjektiv 70 Germaniumoxid-Glas-Linsen 12, 41, 91 zur Achromatisierung im Zusammenwirken mit Quarzglas-Linsen 13, 42, 5, 7, 92 dienen.

Der Laser 11 ist für den DUV-Bereich gewöhnlich ein Excimer-Laser. Alternativ kann eine Quecksilberdampflampe, zum Beispiel für die 312,5 nm-Linie, vorgesehen sein.

Ein strahlaufweitendes Linsensystem 12, 13 ist durch Wahl der Zerstreuungslinse 12 aus GeO₂ und der Sammellinse 13 aus Quarzglas achromatisiert. Der Wabenkondensor 14, zur Homogenisierung häufig eingesetzt, besteht im Beispiel ebenfalls aus einem Array von GeO₂-Zerstreuungslinsen 41 und Quarzglas-Sammellinsen 42. Diese Gruppen 12, 13; 41, 42 können auch eine chromatische Überkompensation aufweisen, die dann mit der weiteren Optik 5 in der Reticle-Ebene 6 eine achromatische Beleuchtung ergibt. Das Projektionsobjektiv 70 mit der Aperturblende 8 und den Linsengruppen 7 und 9 weist ebenfalls bevorzugt im Bereich kleiner Lichtbündeldurchmesser eine GeO₂ - Zerstreuungslinse 91 auf. Linse 92 ist wie die übrigen Linsen aus Quarzglas. Weitere, nicht dargestellte Linsen aus den Linsengruppen 5, 7, 8 können aus GeO₂-Glas bestehen und die Achromatisierung verbessern. In der Bildebene 10 wird der zu belichtende Wafer angeordnet.

Die Herstellung von Germaniumdioxid-Glas erfolgt durch chemisches Abscheiden aus der Dampfphase, bei dem ein Verbrennungsplasma von Germaniumtetrachlorid oder Germaniumtetrahydrid - beides in der Halbleiterindustrie in geeigneter Reinheit verfügbare Stoffe - mit reinem Sauerstoff auf eine Trägerplatte aus amorphem Germaniumdioxid abgeschieden wird. Die Trägerplatte kann durch Verpressen (Sintern) von Germaniumdioxid-Pulver, das nach einem der angegebenen Verfahren aus dem Stand der Technik gewonnen wurde, hergestellt werden.

Alternativ wird gleiches GeO₂-Pulver bei 1500° C etwa 20 Stunden in einem Platin/Iridium-Tiegel aufgeschmolzen und dann langsam abgekühlt und aus dem Tiegel durch Fräsen und Sägen entfernt. Die GeO₂-Glasscheibe mit bis zu ca. 3 cm Dicke und 25 cm Durchmesser und größer ist durch den Übergang von Tiegel-Material in die Schmelze allerdings hinsichtlich der Absorption im DUV verschlechtert.

Die Unterseite dieser primären GeO₂-Glasscheibe - Blasen wandern in der Schmelze nach oben, daher ist unten das Material homogener - wird nun bearbeitet und feinoptisch poliert. Darauf wird dann die CVD-Abscheidung des reinen GeO₂-Glases ausgeführt.

Die Trägerplatte ist wieder verwendbar, da die aufgewachsene Schicht nahe der Grenzschicht zur Trägerplatte abgetrennt wird und dann wieder die Oberfläche poliert werden kann. Die Homogenität der CVD-Abscheidung wird in bekannter Weise durch Dreh- und Exzenterbewegungen der Trägerplatte und geeignete Beheizung sichergestellt.

Bei der Politur ist darauf zu achten, daß wasserfrei z.B. mit Alkohol gearbeitet wird, da durch Wasser die Rekristallisation begünstigt wird. An Luft mit bis zu 40 % relativer Luftfeuchtigkeit ist die Handhabung der polierten GeO₂-Glas-Linsen bei zur Versiegelung durch dünne optische Schichten - als Antireflexschichten sowieso nötig - problemlos möglich.

**Tabelle 1**

| Nr. | Radius (mm) | Abstand (mm) | Material |
|---|---|---|---|
| 0b | | ∞ | |
| 1 | 33,555 | 5,904 | Quarz Suprasil |
| 2 | -45,723 | 5,306 | |
| 3 | -33,666 | 2,000 | GeO₂-Glas |
| 4 | -300,102 | 80,315 | |
| Im Numerische Apertur NA = 0,10 | | | |

## Patentansprüche

1. Achromatisches Linsensystem für Ultraviolettstrahlen mit mindestens einer ersten Linse (1, 2) aus Quarzglas oder einem überwiegend Quarz enthaltenden Glas, dadurch gekennzeichnet, daß mindestens eine zweite Linse (3, 4) aus über 70 % Germaniumdioxid enthaltendem Glas besteht.

2. Achromatisches Linsensystem nach Anspruch 1, dadurch gekennzeichnet, daß die zweite Linse (3, 4) aus reinem Germaniumdioxid besteht.

3. Achromatisches Linsensystem nach Anspruch 1 oder Anspruch 2, dadurch gekennzeichnet, daß die erste Linse (1, 2) sammelnd und die zweite Linse (3, 4) zerstreuend ist.

4. Projektionsbelichtungssystem mit einer Lichtquelle (11) mit einer Wellenlänge von 350 nm oder weniger, gekennzeichnet durch ein achromatisches Linsensystem (20, 70) nach mindestens einem der Ansprüche 1 bis 3.

5. Projektionsbelichtungssystem nach Anspruch 4, dadurch gekennzeichnet, daß die Lichtquelle (11) ein Excimer-Laser oder ein anderer UV-Laser ohne Maßnahmen zur spektralen Einengung ist.

6. Projektionsbelichtungssystem nach Anspruch 4 oder Anspruch 5, dadurch gekennzeichnet, daß das achromatische Linsensystem (12, 13; 41, 42) im Beleuchtungsstrahlengang (20) eingesetzt ist.

7. Projektionsbelichtungssystem nach Anspruch 5 oder Anspruch 6, dadurch gekennzeichnet, daß das achromatische Linsensystem (91, 92) im Projektionsobjektiv (70) angeordnet ist.

8. Verfahren zur Herstellung von optischem Glas aus Germaniumdioxid, dadurch gekennzeichnet, daß aus hochreinem pulverförmigem Germaniumdioxid ein Basiskörper hergestellt wird und auf diesen Basiskörper aus einem Verbrennungsplasma von Germaniumtetrachlorid oder Germaniumtetrahydrid mit reinem Sauerstoff amorphes Germaniumdioxid gleichmäßig abgeschieden und dabei rapide gekühlt wird.

## Claims

1. Achromatic lens system for ultraviolet radiation, having at least one first lens (1, 2) made from quartz glass or a glass predominantly containing quartz, characterized in that at least one second lens (3, 4) consists of glass containing more than 70% of germanium dioxide.

2. Achromatic lens system according to Claim 1, characterized in that the second lens (3, 4) consists of pure germanium dioxide.

3. Achromatic lens system according to Claim 1 or Claim 2, characterized in that the first lens (1, 2) is converging and the second lens (3, 4) is diverging.

4. Projection exposure system having a light source (11) with a wavelength of 350 nm or less, characterized by an achromatic lens system (20, 70) according to at least one of Claims 1 to 3.

5. Projection exposure system according to Claim 4, characterized in that the light source (11) is an excimer laser or another UV laser without measures for spectral narrowing.

6. Projection exposure system according to Claim 4 or Claim 5, characterized in that the achromatic lens system (12, 13; 41, 42) is inserted in the illuminating beam path (20).

7. Projection exposure system according to Claim 5 or Claim 6, characterized in that the achromatic lens system (91, 92) is arranged in the projection lens (70).

8. Method for producing optical glass from germanium dioxide, characterized in that a basic body is produced from high-purity pulverulent germanium dioxide, and amorphous germanium dioxide is deposited uniformly onto this basic body from a combustion plasma of germanium tetrachloride or germanium tetrahydride with pure oxygen and is cooled rapidly in the process.

## Revendications

1. Système de lentilles achromatique pour rayons ultraviolets comprenant au moins une première lentille (1, 2) en verre de quartz ou en un verre contenant essentiellement du quartz, caractérisé en ce qu'au moins une deuxième lentille (3, 4) est constituée de verre contenant plus de 70% de dioxyde de germanium.

2. Système de lentilles achromatique selon la revendication 1, caractérisé en ce que la deuxième lentille (3, 4) est constituée de dioxyde de germanium pur.

3. Système de lentilles achromatique selon la revendication 1 ou la revendication 2, caractérisé en ce que la première lentille (1, 2) est convergente et la deuxième lentille (3, 4) est divergente.

4. Système d'exposition à la lumière par projection présentant une source lumineuse (11) avec une longueur d'onde de 350 nm ou moins, caractérisé par un système de lentilles achromatique (20, 70) selon au moins l'une quelconque des revendications 1 à 3.

5. Système d'exposition à la lumière par projection selon la revendication 4, caractérisé en ce que la source lumineuse (11) est un laser à excimère ou un autre laser à UV sans mesures pour la limitation spectrale.

6. Système d'exposition à la lumière par projection selon la revendication 4 ou la revendication 5, caractérisé en ce que le système de lentilles achromatique (12, 13 ; 41, 42) est placé dans le trajet du faisceau d'éclairage (20).

7. Système d'exposition à la lumière par projection selon la revendication 5 ou la revendication 6, caractérisé en ce que le système de lentilles achromatique (91, 92) est disposé dans l'objectif de projection (70).

8. Procédé pour la fabrication de verre optique en dioxyde de germanium, caractérisé en ce qu'on fabrique un corps de base à partir de dioxyde de germanium très pur sous forme de poudre, et en ce qu'on dépose uniformément du dioxyde de germanium amorphe sur ce corps de base à partir d'un plasma de combustion de tétrachlorure de germanium ou de tétrahydrure de germanium avec de l'oxygène pur tout en le refroidissant rapidement.
